# FASCICULE DE BREVET EUROPEEN

(11) **EP 2 514 055 B1**
(45) Date de publication et mention de la délivrance du brevet: **14.09.2016**
(21) Numéro de dépôt: 10798036.9
(22) Date de dépôt: 14.12.2010
(51) Int. Cl.: H02G 5/06

(54) **DISPOSITIF DE CONNEXION POUR INSTALLATION DE COMMUTATION À ISOLATION GAZEUSE**
VERBINDUNGSVORRICHTUNG FÜR GASISOLIERTE SCHALTANLAGEN
CONNECTION DEVICE FOR GAS-INSULATED SWITCHGEAR

(30) Priorité: 14.12.2009 FR 0958925
(43) Date de publication de la demande: 24.10.2012
(73) Titulaire: General Electric Technology GmbH, 5400 Baden (CH)
(72) Inventeur: TREIER, Lukas, CH-5043 Holziken (CH); PALMIERI, Gerardo, CH-5036 Oberentfelden (CH); BLATTER, Johannes, CH-5014 Gretzenbach (CH)
(74) Mandataire: Ilgart, Jean-Christophe
(86) Numéro de dépôt international: PCT/EP2010/069562
(87) Numéro de publication internationale: WO 2011/073159

(56) Documents cités:
- DE-C1- 19 727 855
- US-A1- 2008 190 650

## Description

### DOMAINE TECHNIQUE

L'invention concerne les appareillages électriques à haute tension comprenant une cuve métallique remplie d'un gaz isolant diélectrique, de type SF6.

L'invention a trait plus particulièrement à un dispositif de connexion d'un axe métallique à une pièce isolante diélectrique dans la cuve.

Une application particulière visée est le montage entre un arbre d'entraînement en rotation en matériau isolant et un contact mobile métallique.

Une autre application visée est la fixation entre un conducteur métallique et un support isolant.

On précise ici que dans le contexte de la présent invention, un « axe métallique » désigne une ou plusieurs pièces métalliques qui constitue(nt) un élément de forme allongée droite et qui ser(ven)t ou non à transmettre des efforts mécaniques.

### ART ANTÉRIEUR

Dans les appareillages, électriques à haute ou moyenne tension comprenant une cuve métallique remplie d'un gaz isolant diélectrique du type SF6, tels que les postes blindés (PSEM ou GIS en anglais) triphasés, il est connu de nombreux dispositifs de connexion d'un axe métallique à une pièce isolante.

Outre les fonctions mécaniques qu'elles doivent remplir, ces dispositifs de connexion doivent principalement présenter une tenue à la tension électrique élevée et ne pas générer de décharges électriques partielles.

Cela est d'autant plus vrai que le gaz isolant à l'intérieur de la cuve a une rigidité diélectrique élevée, c'est-à-dire lorsque les contraintes diélectriques à l'intérieur de la cuve sont élevées.

Différentes solutions sont connues pour obtenir des dispositifs de connexion d'un axe métallique à une pièce isolante, le cas échéant avec les caractéristiques électriques ci-dessus recherchées.

On peut citer le document WO 2006/037914 qui divulgue trois dispositifs de connexion d'un axe métallique à une pièce isolante dans une partie d'un poste blindé à haute ou moyenne tension qui constitue un sectionneur :
- une première connexion est réalisée entré la barre conductrice du courant 6 et le disque isolant 4 en polyester avec des rainures 20, 21 à l'interface pour éviter d'emprisonner de l'air et ainsi éviter les décharges partielles (figure 6),
- une deuxième connexion est réalisée entre la broche conductrice 31 mise à la terre et un trou du disque isolant 4 dans lequel la broche est logée, la broche 31 étant connectée à un bouton cylindrique 32 agencé perpendiculairement; cette deuxième connexion est d'ailleurs réalisée dans une zone de contrainte diélectrique moindre,
- une troisième connexion est réalisée entre un tube métallique 23 et un trou du disque isolant 4 dans lequel le tube est logé, le tube métallique 23 entourant un boulon 24 de fixation du disque isolant 4 entre deux brides métalliques 11, 25.

Le document DE 19 727 855 divulgue, dans son mode de réalisation de la figure 2, un dispositif de connexion d'un tube en matériau conducteur 12 à un trou borgne cylindrique 10 du disque isolant 4 dans lequel le tube 12 est logé. En extrémité inférieure du trou cylindrique 10, il est prévu une communication avec le gaz isolant diélectrique régnant dans les deux cuves métalliques 2, 3 de part et d'autre du disque isolant 4. Ce dispositif de connexion est réalisé dans une zone de contraintes diélectrique moindre.

Le document DE 2 624 908 divulgue deux dispositifs de connexions mécaniques d'une barre conductrice de courant 3, 13 à un disque isolant 1 dans un poste blindé GIS à haute tension :
- une première connexion est réalisée entre la barre conductrice 3 et un trou débouchant d'un disque isolant 1 dans lequel la barre 3 est logée avec insertion d'une garniture 2 moulée en une seule pièce à l'intérieur du disque 1; cette connexion ne peut être réalisée que par moulage intégral de la garniture 2 avec le disque isolant 3,
- une deuxième connexion est réalisée entre une barre conductrice 13 et le trou débouchant 12 du disque isolant 1 dans lequel le prolongement cylindrique 11 de la barre 13 est logé et à la surface duquel une couche conductrice est déposée pour éviter les décharges partielles à l'interface 15 entre le trou 12 et le prolongement conducteur 11 (voir passage de la description en page 9 lignes 1-2) ; cette dispositif de connexion impose la réalisation d'un prolongement cylindrique 11 traversant complètement le disque isolant 1.

Le but de l'invention est de proposer un nouveau dispositif de connexion d'un axe métallique à une pièce isolante dans une cuve métallique remplie d'un gaz isolant diélectrique d'un appareillage haute tension qui pallie tout ou partie des inconvénients des dispositifs de connexion selon l'état de l'art et qui réponde donc à aux moins certaines des conditions suivantes :
- avoir une ténue à la tension élevée et ne pas générer des décharges partielles même sous contraintes diélectriques élevées,
- être simple à mettre en oeuvre,
- avoir des pièces faciles à fabriquer, en particulier en ne nécessitant pas de moulage de la pièce isolante,
- ne pas être limité à un montage de l'axe métallique traversant la pièce isolante.

Un autre but de l'invention est de proposer un nouveau dispositif de connexion d'un axe métallique à une pièce isolante dans une cuve métallique remplie d'un gaz isolant diélectrique d'un appareillage haut tension, qui soit capable de transmettre des forces radialement à l'axe métallique qui soient conséquents et au moins de petites forces axiales selon l'axe métallique.

### EXPOSÉ DE L'INVENTION

Pour ce faire, l'invention a pour objet un dispositif de connexion d'un axe métallique à une pièce isolante dans une cuve métallique remplie d'un gaz isolant diélectrique d'un appareillage électrique haute ou moyenne tension, dans lequel l'axe métallique est ajusté avec serrage dans la pièce isolante avec au moins une portion d'extrémité de l'axe métallique logée dans un trou de la pièce isolante,
dans lequel l'espace, délimitée entre la(les) portion(s) d'extrémité de l'axe métallique avec le trou est suffisamment grand pour éviter les décharges électriques partielles dans ledit trou,
et dans lequel la portion d'extrémité de l'axe qui est la plus proche du fond du trou et ce dernier forment un angle α compris 60 et 120°.

Avantageusement, le dispositif de connexion est tel qui
- l'axe métallique comprend une première portion de forme cylindrique; la deuxième portion étant de forme hémisphérique ou hémi-elliptique adaptée.pour distribuer uniformément le champ diélectrique en contact avec elle, le grand diamètre de l'hémisphère ou hémi-ellipse étant transversal au cylindre de la première portion,
- la pièce isolante comprend un trou avec une première portion cylindrique et une deuxième portion dans le prolongement de la première portion, élargie par rapport à la première portion et remplie du gaz isolant diélectrique.

Selon l'invention, la première portion cylindrique de l'axe métallique est ajustée, avec serrage dans la première portion cylindrique du trou de la pièce isolante et, l'espace délimité entre au moins une partie de la première ou la deuxième portion de l'axe métallique avec la deuxième portion du trou est suffisamment grand pour éviter les décharges électriques partielles dans cette deuxième portion de trou.

Ainsi, grâce à une telle connexion, on s'assure que les phénomènes physiques suivants s'appliquent en combinaison :
- la couche d'arrêt entre le gaz isolant diélectrique et le matériau isolant diélectrique de la pièce isolante se forme selon un angle compris entre 60° et 120°, de préférence perpendiculairement au matériau métallique de l'axe,
- il n'y a pas d'écart suffisamment petit entre axe métallique et pièce isolante susceptible de générer des décharges électriques partielles,
- une charge radiale supportée par l'axe métallique ne crée pas d'écartement supplémentaire entre les premières portions d'axe et du trou puisque l'ajustement avec serrage induit une réaction élastique.

La première portion de l'axe peut comprendre un épaulement et une deuxième portion à l'extrémité opposée de l'épaulement de la première portion, l'épaulement étant alors en butée contre la périphérie de la première portion du trou à l'extrémité opposée à la deuxième portion du trou.

La pièce isolante comprend avantageusement une rainure à la périphérie de la première portion du trou, l'angle formé entre l'épaulement et la, rainure étant compris entre 60 et 120°. La rainure a une profondeur avantageusement d'au moins 2mm.

Selon une variante avantageuse, l'axe métallique comprend une troisième portion entre la première et la deuxième portion, ladite troisième portion étant de forme tronconique pour faciliter l'insertion de l'axe dans le trou avant l'ajustement avec serrage.

De préférence, l'espace délimité entre au moins une partie de la première ou la deuxième portion de l'axe métallique avec la deuxième portion du trou a une hauteur au moins égalé à 2 mm, de préférence d'au moins 4 mm.

Selon une premier mode de réalisation de l'invention, la pièce isolante est un disque isolant fixe et l'axe métallique constitue une goupille de positionnement d'une pièce métallique par rapport au disque isolant.

Selon ce premier mode, le trou dans le disque isolant est un trou borgne, l'axe comprend un canal intérieur pour relier le trou borgne à l'intérieur de la cuve et l'élargissement de diamètre de l'axe, qui est formé par l'épaulement en butée contre la périphérie de la première portion du trou de la pièce isolante, est également en butée contre la pièce métallique, la portion de l'axe au-delà de son élargissement de diamètre étant fixée dans la pièce métallique.

Selon un deuxième mode de réalisation, la pièce isolante est un arbre d'entraînement en rotation et l'axe métallique constitue au moins une partie des moyens de liaison en rotation avec un élément d'entraînement ou entraîné.

Selon une première variante de ce deuxième mode, les moyens de liaison peuvent comprendre une douille métallique fixée dans l'élément d'entraînement par une vis métallique vissée dans l'élément d'entraînement et un capuchon de vis logeant la tête de vis et au moins en partie la douille en étant ajustée avec serrage avec l'arbre d'entraînement.

L'élargissement de diamètre de l'axe, qui est formé par l'épaulement en butée contre la périphérie de la première portion du trou de la pièce isolante, forme de préférence une embase de butée également en butée contre l'élément d'entraînement.

Avantageusement, la largeur de l'embase de butée de l'axe est au moins égale à 1mm.

L'invention concerne régalement un appareillage électrique haute on moyenne tension, comprenant au moins un dispositif de connexion décrit précédemment.

### BRÈVE DESCRIPTION DES DESSINS

D'autres avantages et caractéristiques ressortiront mieux à la lecture de la description détaillée de l'invention faite en référence aux figures suivantes parmi lesquelles :
- la figure 1 est une vue schématique en coupe montrant les moyens généraux du dispositif de connexion selon l'invention,
- la figure 2 est une vue schématique en coupe d'un premier mode de réalisation selon de l'invention,
- la figure 3 est une vue schématique en coupe d'une première variante selon un deuxième mode de réalisation de l'invention,
- la figure 3A est une vue de détail de la figure 3.

### EXPOSÉ DÉTAILLÉ DE MODES DE RÉALISATION PARTICULIERS

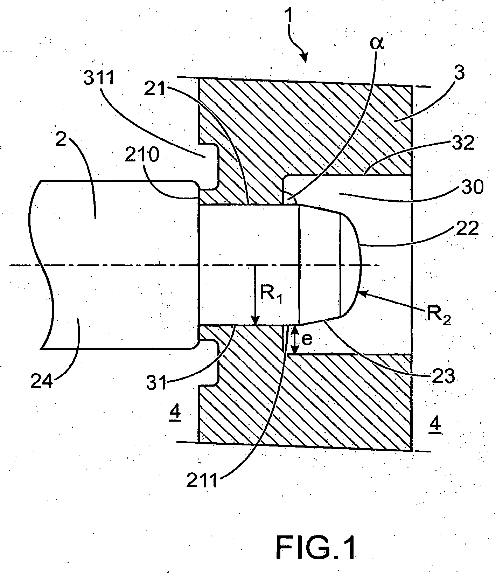

En figure 1, on a représenté un dispositif de connexion selon l'invention 1 d'un axe métallique 2 à une pièce isolante 3.

Ce dispositif 1 est réalisé dans une cuve métallique non représentée remplie d'un gaz isolant 4 hautement diélectrique, tel que du SF6 d'un appareillage électrique haute ou moyenne tension.

L'axe métallique 2 est ici constitué d'une seule pièce avec une première portion 21 de forme cylindrique avec un épaulement 210. Il comprend une deuxième portion 22 de forme hémisphérique adaptée pour distribuer uniformément le champ diélectrique en contact avec elle. Le diamètre de la portion hémisphérique 22 s'étend transversalement au cylindre de la première portion. En figure 1, le rayon R2 est légèrement plus petit que le rayon R1.

La pièce isolante 3 comprend un trou 30, ici débouchant dans la cuve, avec une première portion cylindrique 31 et une deuxième portion 32 élargie par rapport à la première et remplie du gaz isolant diélectrique, puisque le trou est débouchant dans la cuve.

La connexion est réalisée mécaniquement par ajustement avec serrage de la première portion cylindrique 21 de l'axe dans la première portion cylindrique 31 du trou 30 et avec la mise en butée de l'épaulement 210 contre la périphérie de la première portion 31 du trou.

Les côtes d'interférence de l'ajustement avec serrage dépendent de l'élongation et de l'élasticité du matériau isolant de la pièce isolante 3 et de la surface finie de la portion cylindrique 31 du trou et également de la température minimale de fonctionnement de l'appareillage électrique; haute ou moyenne tension. On veille à réaliser un ajustement avec serrage qui permette une déformation suffisante du matériau isolant pour éviter les espaces ou vides qui pourraient résulter de la finition de surface. Toutefois, on veille à ce que l'ajustement avec serrage ne produise pas de fissures dans la pièce isolante 3. Typiquement, on réalise une interférence de l'ordre de 0.1 à 0.2mm pour un diamètre 21 de l'axe métallique 2 de l'ordre de 20 mm.

La connexion est réalisée avec un espace suffisamment grand entre l'axe métallique 2 et la deuxième portion 32 du trou 30 pour éviter les décharges électriques partielles. Plus exactement, comme montré sur la figure 1, l'espace e est délimité entré l'extrémité 211 de la première portion 21 de l'axe ajustée et qui dépasse de la portion cylindrique 31 du trou 30 et, la deuxième portion cylindrique 32 du trou 30 dans laquelle elle est logée. Cet espace e. a une hauteur au moins égale à 2 mm, de préférence au moins égale à 4 mm.

L'extrémité 211 de la première portion 21 l'axe métallique 2.et le fond de la deuxième portion 32 du trou 30 dans lequel elle est logée forment un angle α compris entre 60° et 120°.

Tel qu'illustré en figure 1, l'axe 2 comprend une troisième portion 23 de forme tronconique qui relie la première portion 21 et deuxième portion 22 entre elles. L'angle du tronc de cône de la portion 23 est de préférence compris entre 10 et 15°. La forme tronconique 23 permet d'insérer l'axe 2 avec ajustement avec serrage dans la portion 31 du trou sans créer de copeaux.

Comme représenté l'axe 2 comprend une quatrième portion 24 en butée grâce à l'épaulement 210. Grâce à l'épaulement 210 et la rainure 311, l'interface entre la pièce isolante 3 et le gaz insolant diélectrique 4 est perpendiculaire à l'axe métallique 2. Dans le cadre de l'invention cet écart angulaire peut être compris entre 60° et 120°. La rainure 311 a une profondeur de préférence égale ou supérieure à 2mm. La quatrième portion 24 assure la liaison avec éventuellement transmission d'efforts avec d'autres éléments comme expliqué ci-après.

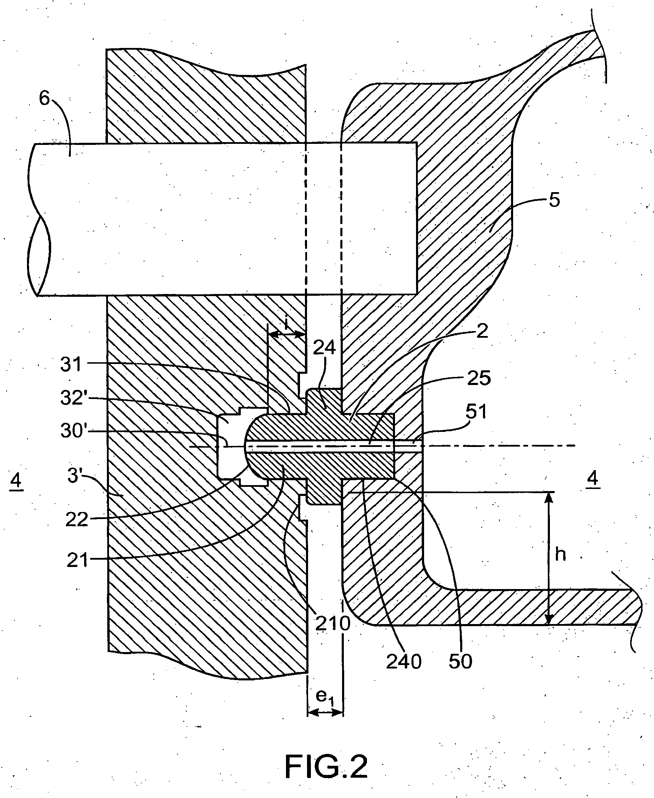

Le mode de réalisation de la figure 2 est mis en oeuvre pour positionner angulairement une pièce métallique 5 par rapport à un disque isolant 3'. Cette pièce métallique 5 est connectée mécaniquement à une barre conductrice 6 fixe elle-même traversant le disque isolant 3' qui la supporte. La pièce métallique 5 peut être une enveloppe métallique logeant au moins partiellement un contact mobile d'un interrupteur, tel qu'un sectionneur. Il peut par exemple s'agir d'une enveloppe métallique décrite dans la demande de brevet la demande de brevet internationale PCT/EP2009/063321 au nom de la demanderesse. La barre conductrice 6 est fixée à la cuve métallique non représentée de l'appareillage haute ou moyenne tension.

L'axe métallique constitue ici une goupille de positionnement en étant ajustée avec serrage dans le trou borgne 30' et vissée ou ajustée avec serrage dans le trou également borgne 50 pratiqué dans la pièce métallique 5. L'élargissement de diamètre de l'axe 24, qui est formé par l'épaulement 210 est en butée contre la périphérie de la première portion 31' du trou 30' du disque isolant 3. L'élargissement 24 est également en butée contre la pièce métallique 5, la portion de l'axe 240 au delà de l'élargissement étant celle vissée ou ajustée avec serrage dans le trou 50. L'élargissement calibré 24 délimite un espace calibré e1 entre le disque isolant 3' et la pièce métallique 5, typiquement de l'ordre de 5mm, qui permet également d'éliminer des décharges électriques partielles.

Pour des raisons diélectriques, la distance h entre la partie périphérique du diamètre élargi 24 de l'axe métallique 2 et le bord périphérique de la barre métallique 5 est égal à au moins deux fois la valeur i de pénétration de l'axe métallique 2 dans le disque isolant 3'.

Afin de remplir le trou borgne 30' du gaz isolant diélectrique, l'axe métallique 2 est percé intérieurement d'un canal de ventilation 25 en communication avec le canal de ventilation 51 pratiqué en bout du trou 50 de la pièce métallique, ce dernier 51 débouchant directement dans la cuve remplie du gaz isolant 4.

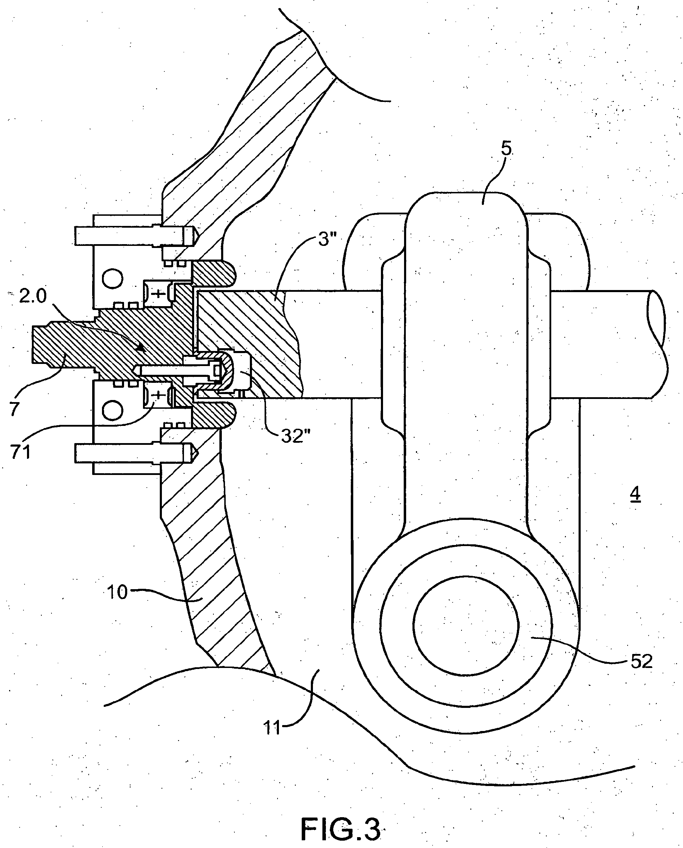

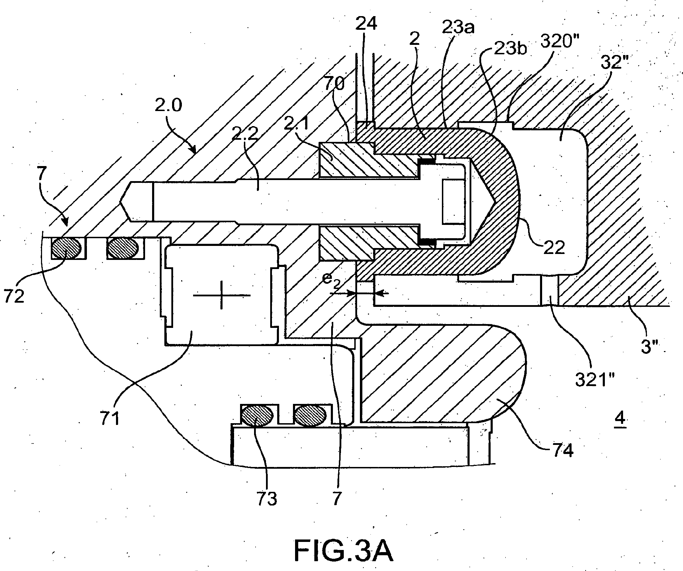

Le deuxième mode de réalisation de l'invention est illustré aux figures 3 et 3A. Dans ce deuxième mode, la pièce isolante est un arbre d'entraînement 3'' en rotation et l'axe métallique 2 constitue au moins une partie des moyens de liaison en rotation avec un élément d'entraînement 7.

En figure 3, la cuve métallique 10 de l'appareillage électrique qui est remplie du gaz isolant 4 du type SF6, est représentée avec un disque isolant 11. Cet appareillage comprend trois interrupteurs sectionneurs dont l'agencement est décrit plus en détail dans la demande de brevet PCT/EP2009/063321 précitée. Seule une partie d'un des interrupteurs est représentée: il s'agit de l'enveloppe métallique 5 par ailleurs fixée en un point au disque isolant 11 et logeant au moins partiellement un contact mobile 52. Cette enveloppe métallique 5 est en outre connectée à des conducteurs non représéntés sous haute tension. Le contact mobile 52 est lié en rotation à un arbre d'entraînement 3''.

L'élément d'entraînement 7 est lui-même entraîné en rotation par un actionneur agencé à l'extérieur de la cuve 10 et monté libre en rotation dans celle-ci par un roulement à billes 71. Le montage de l'élément d'entraînement 7 dans la cuve est par ailleurs étanche grâce à des joints 72, 73.

L'élément d'entraînement 7 est lié en rotation à l'arbre d'entraînement 3" en matériau isolant par trois axes métalliques 2 selon l'invention

Les moyens de liaison 2.0 en rotation entre l'élément d'entraînement 7 et l'arbre isolant 3" comprennent une douille 2.1, une vis 2.2 et un capuchon de vis 2 qui constitue l'axe métallique selon l'invention.

La douille 2.1 est fixée dans un trou 7.0 pratiqué dans l'élément d'entraînement 7 par l'intermédiaire de la vis 2.2 et elle fait saillie dans la partie collier 74 de l'élément d'entraînement 7 qui est adaptée pour contrôler le champ électrique.

Le capuchon 2 est ajusté avec serrage dans le trou 32'' pratiqué en bout d'arbre 3". Le trou 32'' comprend une cavité 320" au niveau de la partie tronconique 23 de l'axe métallique 2. Comme représenté en figure 3A, le capuchon 2 comprend une portion cylindrique 23a, une portion conique 23b et une portion hémisphérique 22. Cette cavité 320' est suffisamment grande et l'interface avec le gaz diélectrique isolant 4 se termine perpendiculairement à la surface de l'axe 2: on évite ainsi des décharges électriques partielles à cet endroit. La portion 22 du capuchon est de forme hémisphérique pour les raisons expliquées ci avant. Le trou 32'' comprend un conduit de ventilation 321'' pour remplir le trou avec le gaz isolant 4 régnant dans la cuve 10.

En outre, l'élargissement de diamètre 24 est en butée à la fois contre l'élément d'entraînement 7 et contre l'arbre d'entraînement 3''. L'élargissement est de hauteur ici e2 aussi calibrée, typiquement égale à au moins 1mm, de préférence au moins égale à 3mm pour éviter les décharges partielles électriques entre les deux pièces d'entraînement en rotation 7, 3".

## Revendications

1. Dispositif de connexion (1) d'un axe métallique (2) à une pièce isolante (3, 3', 3'') dans une cuve métallique (10) remplie d'un gaz (4) isolant diélectrique d'un appareillage électrique haute ou moyenne tension, dans lequel l'axe métallique (2) est ajusté avec serrage dans la pièce isolante (3) avec au moins une portion d'extrémité (21, 211, 22, 23) de l'axe métallique logée dans un trou (30, 32) de la pièce isolante,
dans lequel l'espace délimité e entre la (les) portion(s) d'extrémité de l'axe métallique avec le trou est suffisamment grand pour éviter les décharges électriques partielles dans ledit trou,
et dans lequel la portion d'extrémité (21, 211) de l'axe (2) qui est la plus proche du fond du trou (30, 32) et ce dernier forment un angle α compris entre 60° et 120°.

2. Dispositif de connexion (1) selon la revendication 1, dans lequel :
- l'axe métallique (2) comprend une première portion (21) de forme cylindrique et une deuxième portion (22), la deuxième portion étant de forme hémisphérique ou hémi-elliptique adaptée pour distribuer uniformément le champ diélectrique en contact avec elle, le grand diamètre de l'hémisphère ou hémi-ellipse étant transversal au cylindre de la première portion,
- la pièce isolante (3) comprend un trou (30) avec une première portion (31) cylindrique et une deuxième portion (32) dans le prolongement de la première portion, élargie par rapport à la première portion et remplie du gaz isolant diélectrique,
et dans lequel la première portion cylindrique de l'axe métallique est ajustée avec serrage dans la première portion cylindrique du trou de la pièce isolante.

3. Dispositif de connexion (1) selon la revendication 2, dans lequel l'axe métallique (2) comprend une troisième portion (23) entre la première et la deuxième portion, ladite troisième portion étant de forme tronconique pour faciliter l'insertion de l'axe dans le trou.

4. Dispositif de connexion selon l'une des revendications 2 ou 3, dans lequel l'espace délimité entre au moins une partie de la première ou la deuxième portion de l'axe métallique avec la deuxième portion du trou a une hauteur au moins égalé à 2 mm, de préférence d'au moins 4 mm.

5. Dispositif de connexion selon l'une des revendications 2 à 4, dans lequel la première portion (21) de l'axe métallique (2) comprend un épaulement (210), l'épaulement étant en butée contre la périphérie de la première portion (31) du trou à l'extrémité opposée à la deuxième portion du trou.

6. Dispositif de connexion (1) selon la revendication 5, dans lequel la pièce isolante comprend une rainure (311) à la périphérie de la première portion du trou (31), l'angle formé entre l'épaulement (210) et la rainure (311) étant compris entre 60° et 120°.

7. Dispositif de connexion (1) selon la revendication 6, dans lequel la rainure a une profondeur d'au moins 2mm.

8. Dispositif de connexion (1) selon l'une des revendications précédentes, dans lequel la pièce isolante est un disque isolant fixe (3') et l'axe métallique constitue une goupille de positionnement d'une pièce métallique (5) par rapport au disque isolant.

9. Dispositif de connexion selon la revendication 8 en combinaison avec la revendication 5, dans lequel :
- le trou dans le disque isolant est un trou borgne (30'),
- l'axe (2) comprend un canal intérieur (25) pour relier le trou borgne à l'intérieur de la cuve et,
- un élargissement de diamètre (24) de l'axe, qui est formé par l'épaulement en butée contre la périphérie de la première portion du trou de la pièce isolante, est également en butée contre la pièce métallique, la portion (240) de l'axe au-delà de son élargissement de diamètre étant fixée dans la pièce métallique (5).

10. Dispositif de connexion (1) selon l'une des revendications 5 à 7, dans lequel la pièce isolante est un arbre d'entraînement en rotation (3'') et l'axe métallique constitue au moins une partie des moyens de liaison en rotation avec un élément d'entraînement (7).

11. Dispositif de connexion selon la revendication 10, dans lequel les moyens de liaison (2.0) comprennent une douille (2.1) métallique fixée dans l'élément d'entraînement par une vis (2.2) métallique vissée dans l'élément d'entraînement et un capuchon de vis (2), logeant la tête de vis et au moins en partie la douille, étant ajusté avec serrage avec l'arbre d'entraînement (3'').

12. Dispositif de connexion (1) selon l'une des revendications 10 ou 11, dans lequel l'élargissement de diamètre de l'axe, qui est formé par l'épaulement en butée contre la périphérie de la première portion du trou de la pièce isolante, forme une embase de butée (24) également en butée contre l'élément d'entraînement (7).

13. Dispositif de connexion (1) selon la revendication 12, dans lequel la largeur e2 de l'embase de butée de l'axe est au moins égale à 1mm.

14. Appareillage électrique haute ou moyenne tension, comprenant au moins un dispositif de connexion (1) selon l'une des revendications précédentes.

## Patentansprüche

1. Vorrichtung (1) zum Verbinden einer Metallachse (2) mit einem isolierenden Werkstück (3, 3', 3") in einem Metallgefäß (10), das mit einem dielektrischen isolierenden Gas (4) gefüllt ist, bei einem elektrischen Hoch- oder Mittelspannungsgerät, wobei die Metallachse (2) mit Klemmen in dem isolierenden Werkstück (3) eingepasst ist, wobei wenigstens ein Endbereich (21, 211, 22, 23) der Metallachse in einem Loch (30, 32) des isolierenden Werkstücks angeordnet ist,
wobei der Raum, der begrenzt ist zwischen dem (den) Endbereich(en) der Metallachse mit dem Loch ausreichend groß ist, um partielle elektrische Entladungen in dem Loch zu vermeiden,
und wobei der Endbereich (21, 211) der Achse (2), der dem Boden des Lochs (30, 32) am nächsten liegt, und dieses letztgenannte einen Winkel a bilden, der zwischen 60° und 120° enthalten ist.

2. Verbindungsvorrichtung (1) nach Anspruch 1, wobei:
- die Metallachse (2) einen ersten Bereich (21) mit zylindrischer Form und einen zweiten Bereich (22) umfasst; wobei der zweite Bereich eine Halbkugel- oder Halbellipsenform aufweist, die dazu ausgelegt ist, das dielektrische Feld in Kontakt hiermit gleichmäßig zu verteilen, wobei der große Durchmesser der Halbkugel oder Halbellipse quer zum Zylinder des ersten Bereichs ist,
- das isolierende Werkstück (3) ein Loch (30) mit einem ersten zylindrischen Bereich (31) und einem zweiten Bereich (32) in der Verlängerung des ersten Bereichs umfasst, der im Vergleich zum ersten Bereich aufgeweitet und mit dem dielektrischen isolierenden Gas gefüllt ist,
und wobei der erste zylindrische Bereich der Metallachse mit Klemmen in dem ersten zylindrischen Bereich des Lochs des isolierenden Werkstücks eingepasst ist.

3. Verbindungsvorrichtung (1) nach dem Anspruch 2, wobei die Metallachse (2) einen dritten Bereich (23) zwischen dem ersten und dem zweiten Bereich umfasst, wobei der dritte Bereich eine Kegelstumpfform hat, um das Einführen der Achse in das Loch zu erleichtern.

4. Verbindungsvorrichtung nach einem der Ansprüche 2 oder 3, wobei der Raum, der begrenzt ist zwischen wenigstens einem Teil des ersten oder des zweiten Bereichs der Metallachse mit dem zweiten Bereich des Lochs, eine Höhe von wenigstens gleich 2 mm hat, vorzugsweise wenigstens 4 mm.

5. Verbindungsvorrichtung nach einem der Ansprüche 2 bis 4, wobei der erste Bereich (21) der Metallachse (2) eine Schulter (210) umfasst, wobei die Schulter gegen den Umfang des ersten Bereichs (31) des Lochs an dem Ende entgegengesetzt zum zweiten Bereich des Lochs anliegt.

6. Verbindungsvorrichtung (1) nach Anspruch 5, bei dem das isolierende Werkstück eine Rille (311) am Umfang des ersten Bereichs des Lochs (31) umfasst, wobei der zwischen der Schulter (210) und der Rille (311) gebildete Winkel zwischen 60° und 120° enthalten ist.

7. Verbindungsvorrichtung (1) nach Anspruch 6, wobei die Rille eine Tiefe von wenigstens 2 mm hat.

8. Verbindungsvorrichtung (1) nach einem der vorhergehenden Ansprüche, wobei das isolierende Werkstück eine feste isolierende Scheibe (3') ist, und die Metallachse einen Stift zum Positionieren eines metallischen Werksstücks (5) relativ zu der isolierenden Scheibe bildet.

9. Verbindungsvorrichtung nach Anspruch 8 in Verbindung mit Anspruch 5, wobei:
- das Loch in der isolierenden Scheibe ein Sackloch (30') ist,
- die Achse (2) einen Innenkanal (25) zum Verbinden des Sacklochs mit dem Inneren des Gefäßes umfasst, und
- eine Aufweitung des Durchmessers (24) der Achse, die gebildet ist durch die Schulter in Anlage gegen den Umfang des ersten Bereichs des Lochs des isolierenden Werkstücks ebenfalls in Anlage ist gegen das metallische Werkstück, wobei der Bereich (240) der Achse jenseits ihrer Durchmesseraufweitung in dem metallischen Werkstück (5) befestigt ist.

10. Verbindungsvorrichtung (1) nach einem der Ansprüche 5 bis 7, wobei das isolierende Werkstück eine Drehantriebswelle (3") ist, und wobei die Metallachse wenigstens einen Teil der Drehverbindungsmittel mit einem Antriebselement (7) bildet.

11. Verbindungsvorrichtung nach Anspruch 10, wobei die Verbindungsmittel (2.0) eine Metallhülse (2.1) umfassen, die in dem Antriebselement mittels einer Metallschraube (2.2) befestigt ist, die in das Antriebselement geschraubt ist, sowie eine Schraubenschutzkappe (2), die den Schraubenkopf und wenigstens einen Teil der Hülse aufnimmt, wobei sie mit Klemmung mit der Antriebswelle (3") eingepasst ist.

12. Verbindungsvorrichtung (1) nach einem der Ansprüche 10 oder 11, wobei die Verbreiterung des Durchmessers der Achse, die durch die Schulter in Anlage gegen den Umfang des ersten Bereichs des Lochs des isolierenden Werkstücks gebildet ist, eine Anschlagsbasis (24) bildet, die ebenfalls in Anlage gegen das Antriebselement (7) ist.

13. Verbindungsvorrichtung (1) nach Anspruch 12, wobei die Breite e2 der Anschlagsbasis der Achse wenigstens gleich 1 mm ist.

14. Elektrisches Hoch- oder Mittelspannungsgerät, umfassend wenigstens eine Verbindungsvorrichtung (1) nach einem der vorhergehenden Ansprüche.

## Claims

1. A connection device (1) for connecting a metal pin (2) to an insulating part (3, 3', 3") in a metal tank (10) filled with a dielectric insulating gas (4) of high- or medium-voltage electrical switchgear,
wherein the metal pin (2) is a tight fit in the insulating part (3) with at least one end portion (21, 211, 22, 23) of the metal pin being received in a hole (30, 32) of the insulating part;
wherein the defined space e between the end portion(s) of the metal pin and the hole is large enough to avoid partial electric discharges in said hole; and
wherein the end portion (21, 211) of the pin (2) that is closest to the end of the hole (30, 32) forms therewith an angle α lying in the range 60° to 120°.

2. A connection device (1) according to claim 1, wherein:
- • the metal pin (2) has a first portion (21) of cylindrical shape and a second portion (22); the second portion being hemispherical or hemi-elliptical in shape suitable for uniformly distributing the dielectric field in contact therewith, the large diameter of the hemisphere or hemi-ellipse extending transversely to the cylinder of the first portion,
- • the insulating part (3) has a hole (30) with a cylindrical first portion (31) and a second portion (32) extending the first portion, which second portion is larger than the first portion and is filled with a dielectric insulating gas, and
wherein the cylindrical first portion of the metal pin is a tight fit in the cylindrical first portion of the hole of the insulating part.

3. A connection device (1) according to claim 2, wherein the metal pin (2) has a third portion (23) between the first and second portions, said third portion being frustoconical in shape to facilitate inserting the pin in the hole.

4. A connection device according to any one of claims 2 or 3, wherein the space defined between at least a fraction of the first or the second portion of the metal pin with the second portion of the hole has a height that is at least equal to 2 mm, and preferably at least 4 mm.

5. A connection device according to any of claims 2 to 4, wherein the first portion (21) of the metal pin (2) includes a shoulder (210), the shoulder being in abutment against the periphery of the first portion (31) of the hole at the end opposite from the second portion of the hole.

6. A connection device (1) according to claim 5, wherein the insulating part includes a groove (311) at the periphery of the first portion of the hole (31), the angle formed between the shoulder (210) and the groove (311) lying in the range 60° to 120°.

7. A connection device (1) according to claim 6, wherein the groove has a depth of at least 2 mm.

8. A connection device (1) according to any preceding claim, wherein the insulating part is a stationary insulating disk (3') and the metal pin constitutes a positioning pin for positioning a metal part (5) relative to the insulating disk.

9. A connection device according to claim 8 in combination with claim 5, wherein:
- the hole in the insulating disk is a blind hole (30') ;
- the pin (2) includes an internal channel (25) for connecting the blind hole to the inside of the tank; and
- a diameter enlargement (24) of the pin that is formed by the shoulder in abutment against the periphery of the first portion of the hole in the insulating part, is likewise in abutment against the metal part, the portion (240) of the pin beyond its diameter enlargement being fastened in the metal part (5).

10. A connection device (1) according to any one of claims 5 to 7, wherein the insulating part is a rotary driving shaft (3") and the metal pin constitutes at least a portion of rotary connection means with a driving or driven (7) element.

11. A connection device according to claim 10, wherein the connection means (2.0) comprise a metal bushing (2.1) fastened in the driving element by a metal screw (2.2) screwed into the driving element, and a screw cap (2) housing the head of the screw and at least a portion of the bushing, being arranged as a tight fit in the driving shaft (3").

12. A connection device (1) according to claim 10 or claim 11, wherein the diameter enlargement of the pin, as formed by the shoulder in abutment against the periphery of the first portion of the hole in the insulating part, forms an abutment base (24) that is also in abutment against the driving element (7).

13. A connection device (1) according to claim 12, wherein the width e2 of the abutment base on the pin is not less than 1 mm.

14. High- or medium-voltage electrical switchgear including at least one connection device (1) according to any preceding claim.
